(19) Europäisches Patentamt

European Patent Office

Office européen des brevets

(11) **EP 1 562 314 A1**

(12) **EUROPEAN PATENT APPLICATION**

(43) Date of publication:
**10.08.2005 Bulletin 2005/32**

(51) Int Cl.7: **H04B 10/17**

(21) Application number: **04290304.7**

(22) Date of filing: **05.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• Seguineau, Frédéric<br>  **91440 Bures-sur-Yvette (FR)**<br>• Leclerc, Olivier<br>  **91700 Sainte Geneviève des Bois (FR)** |
| (71) Applicant: **ALCATEL**<br>**75008 Paris (FR)** | (74) Representative: **Rausch, Gabriele, Dr. et al**<br>**Alcatel**<br>**Intellectual Property Department, Stuttgart**<br>**70430 Stuttgart (DE)** |

(54) **Optical regenerator for high bit rate return-to-zero transmission**

(57) It is propose to use a DI-NOLM comprising an optical loop made of two spools of dispersive fibers with large effective area but of local dispersion of opposite sign and a HLN fiber in between. In this configuration according to the invention, the input optical signal needs to be initially chirped. A nonlinear phase shift is then generated between both counter propagating optical fields inside the HNL as the consequence of the peak power imbalance. Advantageously, it is possible to process RZ or RZ/DSPK with a rather large shape at halfway taking even more than 65% of bit time. This can be achieved without any alteration of the optical regeneration. Moreover, in this configuration by using the method according to the invention, the compensation dispersion is realized inside the DI-NOLM, and so it is not necessary to add a compensating dispersion state at this interferometer.

Fig. 3

**Description**

Technical Field

The present invention relates to a method and an optical regenerator for waveform shaping of optical signal.

Background of the invention

Optical communications at ultra/high bit rates of return-to-zero (RZ) or RZ/differential phase shift keyed signal (RZ/DSPK) over long distances as for submarine networks suffer from severe degradations occurring during propagation. Such degradations can be so important to become one of the main limitation at bit rates equal or greater than 40 Gbit/s. Indeed, in an optical fiber communication system that has been put to practical use in recent years, a reduction in signal power due to transmission linear loss, coupling loss, etc. is compensated by using an optical amplifier such as an Erbium-doped fiber amplifier (EDFA). Such optical amplifier is an analog amplifier, which functions to linearly amplify a signal. In this kind of optical amplifier, amplified spontaneous emission (ASE) noise generated in association with the amplification causes a reduction in optical signal-to-noise ratio (OSNR). This implies that the number of successive repeaters is limited resulting in a limit for the transmission distance. Furthermore, waveform degradation due to the chromatic dispersion present in optical fibers and the nonlinear optical effects in the fiber are other causes for the transmission limit. To break down such a limit, a regenerative repeater is required for digitally processing a signal. In particular, an all-optical regenerative repeater capable of performing all kinds of signal processing in optical level is important in realizing a transparent operation independent of the bit rate, pulse shape, etc. of a signal.

The functions required for the all-optical regenerative repeater are amplitude restoration or re-amplification, waveform shaping or re-shaping, and timing restoration or re-timing. These functions are referred to as 3R functions, and in particular, the first and second functions are referred to as 2R functions. The 2R functions can be provided by combining a waveform shaping device and an optical amplifier, or by using a waveform shaping device having an optical amplifying function.

In that respect, 2R optical regeneration using optical gate was proven to alleviate these limitations (stabilization of OSNR at high level, and limitation of amplitude variations). Such optical gates are non-linear fiber based devices exploiting the ultra fast Kerr effect (fs-range). One of the most convenient optical gate is the so called Sagnac or fiber loop interferometer forming a non-linear optical loop mirror (NOLM).

Basically, a NOLM is a section of fiber connected to a coupler/splitter so as to form a loop. An optical signal injected into the device, divides into two counterpropagating waves. These waves travel into opposite directions and recombine after propagation through some length of (Kerr) fiber at this splitter. Provided that the coupler is balanced (i.e., its cross-coupling ratio is $\alpha=0.5$), it can be shown that the interferometer reflects the initial signal thoroughly, therefore, the name mirror. Usually, such NOLM is used as a two-wavelength NOLM with an optical control wave injected through a coupler located in the loop, near either branch of the splitter. As opposed to the signal wave, the control wave travels in only one direction. Through cross-Kerr effect, the signal wave copropagating with the control wave experiences a nonlinear phase-shift different from the nonlinear phase-shift experienced by the counterpropagating signal wave. This phase difference is converted into a variation of the signal intensity at NOLM output, making it possible to switch the signal by the control. When this phase difference reaches $\pi$, the signal is totally transmitted at the NOLM output. The NOLM acts then like an optically-controlled logical AND gate.

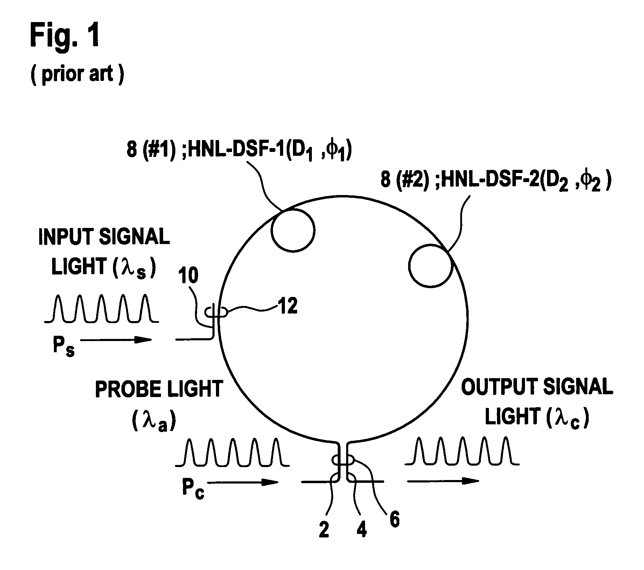

In EP 1 298 485 is shown such kind of optical gate. Referring to figure 1, there is shown a configuration of a NOLM including a first optical coupler 6 with first and second optical paths 2 and 4 directionally coupled to each other, a loop optical path 8 for connecting the first and second optical paths 2 and 4, and a second optical coupler 12 including a third optical path 10 directionally coupled to the loop optical path 8. Latter is provided by a nonlinear optical medium which on figure 1 is obtained by splicing two fibers 8 (#1) and 8 (#2) with dispersions set substantially equal to each other but opposite in sign.

A probe light is input into the first optical path 2 of the optical coupler 6 with a coupling ratio set substantially to 1:1. The probe light is therefore divided into two components having the same power. The two components propagate in the loop optical path 8 clockwise and counterclockwise, respectively, with exactly the same optical path length, and are next subjected to a phase shift for each by the nonlinear optical medium. Thereafter, they are combined by the optical coupler 6. In combining these components at the optical coupler 6, they are equal in power and phase to each other, so that resultant light obtained by this combination is output from the first optical path 2 but not output from the second optical path 4 as if it is reflected by a mirror. When an optical signal is input from the middle of the loop optical path 8 by the optical coupler 12, this optical signal propagates in the loop optical path 8 in only one direction thereof, here clockwise, and the nonlinear refractive index of the nonlinear optical medium NL changes for the light propagating in this direction only when on-pulses pass therethrough. Accordingly, in combining the two components of the probe light at the optical coupler 6, the phases of the two components of the probe light at their portions synchronous with off-pulses of the optical signal are coincident with each other, and the phases of the two components of the probe light at their portions synchronous with on-pulses of the optical signal are different from each other. Letting $\Delta\phi$ defining a phase difference in the latter case, an output proportional to 1-cos $(\Delta\phi)$ is obtained from the second optical path 4 of the optical coupler 6. By setting the power of the input optical signal so that the phase difference becomes $\pi$, it is possible to perform a switching operation such that the two components combined upon passing of the on-pulses are output only from the second optical path 4. Thus, the conversion from the optical signal having the wavelength $\lambda_s$ into the converted optical signal having the wavelength $\lambda_c$ is performed. That is, wavelength conversion is performed on the data of the optical signal. Noise accompanying the input optical can be suppressed when setting the "0" level and the "1" level of the input optical signal respectively correspond to 0 and $\pi$ of the phase difference $\Delta\phi$. This is due to the fact that the conversion in accordance with 1-cos$(\Delta\phi)$ exhibits a saturable characteristic near the leading edge or the peak of each pulse unlike linear amplification conversion.

Optical fiber can be used as nonlinear NL optical medium in the NOLM. A dispersion shifted fiber (DSF) is mainly used as such NL optical fiber. In EP 1 298 485 was already proposed to use a DSF with highly nonlinear dispersion property. Latter property is obtained by reducing the mode field diameter corresponding to the effective core area. Nevertheless, there are variations in the zero-dispersion wavelength itself along the fiber, the group velocities for the different propagating wavelengths become different from each other, causing a limit to a conversion band and a convertible signal rate. Thus, such conversion band is limited by dispersion. If dispersion along the fiber is perfectly controlled, for example, if a fiber having a zero-dispersion wavelength uniform over the entire length is fabricated, an almost infinite conversion band could be obtained by locating the wavelength of the probe light and the optical signal in symmetrical relationship with respect to the uniform zero-dispersion wavelength. Actually, however, the zero-dispersion wavelength varies along the fiber, causing a deviation of the phase matching condition from an ideal condition to result in a limit of the conversion band. On figure 1 is shown a loop optical path 8 according to the prior art provided by splicing two fibers 8 (#1) and 8 (#2) each configured by an highly nonlinear DSF so as to obtain a wide conversion band. Particularly if the loop optical path 8 is obtained by combining two fibers which dispersion and dispersion slopes are opposite in sign, an almost completely compensation of the dispersion of both the signal pulses and the probe pulses will occur. Accordingly, it is possible to provide a NOLM reduced in the walk-off and in the pulse shape degradation. Furthermore, optical Kerr effect or cross phase modulation can be generated very efficiently.

As set up as described in that prior art has the big disadvantage to require a supplementary laser for the input signal light used as pumping light. On top of that, a clock recovery must be provided for that input signal light. Such clock recovery is a real limitation at high rates i.e. at 43 Gbit/s or above.

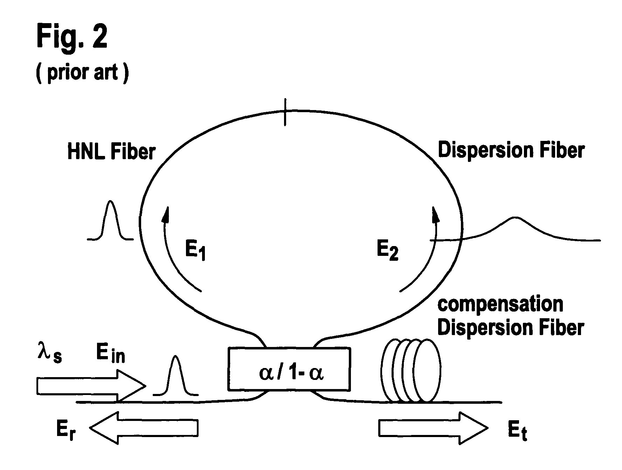

In a paper from F. Seguineau et al. presented at ECOC 2003 was proposed a Dispersion-Imbalanced NOLM (DI-NOLM). Such DI-NOLM is shown on figure 2 with a coupler 23 to which are connected an input optical path 22 and an output optical path 24 as well as first and second optical paths respectively 25, 26 forming an optical loop path including a first and a second fiber. The first fiber is made of a one kilometer long HNL-fiber with a local dispersion near to Ops/(nm.km). The second fiber 26 is made of a 3.35km standard single mode fiber with a dispersion around 17ps/(nm.km). The coupler 23 is chosen such that $\alpha=0.5$. Therefore, the supplied input optical signal $E_{in}$ $(\lambda_S)$ at input 22 is equally divided by the coupler 23 into two optical signals $E_1$ and $E_2$ propagating clockwise and counterclockwise respectively in the loop optical path formed by the first and second fibers 25, 26. A polarization controller not shown on figure 2 is inserted in the DI-NOLM as to select the proper polarization states in this interferometer. An Erbium-doped fiber amplifier (also not shown on figure 2) and a dispersion compensation fiber 29 (DCF) are placed before and after the DI-NOLM as to control the input power and to compensate the residual chromatic dispersion, respectively. Such a Dispersion-Imbalanced NOLM exploits the strongly enhanced Kerr effect in HNL fibers which induces a phase variation between two pulses propagating in counter direction within the device. The asymmetric nature in chromatic dispersion of the DI-NOLM allows a fine control of the amount of phase difference through a control of the launched peak power. By using such a DI-NOLM, it is possible to regenerate ultra-fast signal at around 40 Gbit/s. Clear bit-to-bit signal fluctuation suppression is observed even if the reshaping effect is larger for space levels (at least 3dB) than for mark levels suggesting a potential noise redistribution effect.

The DI-NOLM as shown on figure 2 is composed with two types of fibers, a high nonlinear fiber 25 to create a nonlinear phase variation long pulse shape, and a dispersive fiber 26 with large effective area. Latter induces a temporal broadening ending up into an optical peak power decrease. The optical field $E_1$ is directly launched into a HNL-fiber (with its maximum peak power), contrary at optical field $E_2$ which is firstly broaden inside dispersive fiber 26. At a consequence of the peak power decrease induced in the highly dispersive fiber, the nonlinear phase accumulated by $E_2$ in the HNL is very low with respect to that of optical field $E_1$. With such configuration only short pulses return-to-zero (RZ) or return-to-zero differential phase shift key (RZ/DPSK) pulses can be proceeded. And it is required to place the dispersion compensation fiber 29 after the DI-NOLM as to recover temporal pulse width after the output 24 similar to that at the DI-NOLM input 22.

## Summary of the invention

In view of the above, it is an object of the present invention to provide a method of regenerating optical signals and an optical regenerator for optical signals adapted for ultra-high bit rate and different kind of RZ pulses even of quite large width at half way without requiring a particular pre-treatment of that signal.

This object is achieved in accordance with the invention by using a DI-NOLM comprising an optical loop made of two spools of dispersive fibers with large effective area but of local dispersion of opposite sign as well as a HLN fiber in between. In this configuration according to the invention, the input optical signal needs to be initially chirped either using an additional stage or by placing the apparatus at a given location in the dispersion-managed transmission line. As a consequence of this chirp, incoming pulses are either temporarily compressed or broadened depending of the sign of the local dispersion in the two arms of the optical loop of the DI-NOLM. Then, a nonlinear phase shift is generated between both counterpropagating optical fields inside the HNL as the consequence of the peak power imbalance. Advantageously, it is possible to process RZ or RZ/DSPK with a rather large shape at half-way taking even more than 65% of bit time. This can be achieved without any alteration of the optical regeneration. Moreover, in this configuration by using the method according to the invention, the compensation dispersion is realized inside the DI-NOLM, and so it is not necessary to add a compensating dispersion state at this interferometer.

The DI-NOLM transfer function (Transmittance) can be described by following equation.

$$T_{(t)} = 1 - 4\,\alpha(1-\alpha)\cos^2\!\left(\frac{\Delta\phi}{2}\right)$$

where $\alpha$ is the coupling ratio, and $\Delta\phi$ the nonlinear phase shift.

A transmittance defined by such equation is compatible with an optical power limiter function (for "1" symbols) which can be obtained for a nonlinear phase shift slightly greater than $\pi$. Conversely, a saturable absorber-like transfer function of the DI-NOLM is obtained for low nonlinear phase shift.

Such saturable absorber and optical power limiting functions can be advantageously used to improve RZ-DPSK (but also RZ-On-Off-Keying) transmission system. With RZ-DPSK modulation format and since the data are phase-coded, an interferometer (Mach-Zehnder) is required at the receiver side, as to recover the information in the amplitude domain. Under this condition, the quality of received and amplitude-translated information strongly depends upon the amplitude variations of the RZ-DPSK optical data stream, which can be efficiently reduced when implementing DI-NOLM in the transmission line — hence ensuring also a significantly-improved system performance-.

When used with RZ modulation formats, standard DI-NOLM as shown in prior arts are required to operate with short pulses at input scheme. Shorts pulses induced high optical peak power to generate high nonlinear effect into HNL Fiber, but also to limit inter-pulses cross talk due to temporal broadening inside dispersion fiber. On the contrary, the configuration according to the invention is compatible with 50% RZ and 50% RZ-DPSK modulation format.

Advantageous developments of the invention are described in the dependent claims, the following description and the drawings.

## Description of the drawings

An exemplary embodiment of the invention will now be explained further with the reference to the attached drawings in which:

Fig. 1     is a schematic view of a nonlinear optical loop mirror according to a prior art;

Fig. 2     is a schematic view of a nonlinear optical loop mirror according to another prior art;

Fig. 3     is a schematic view of a dispersion imbalanced nonlinear optical loop mirror according to the invention.

## Detailed description of preferred embodiments

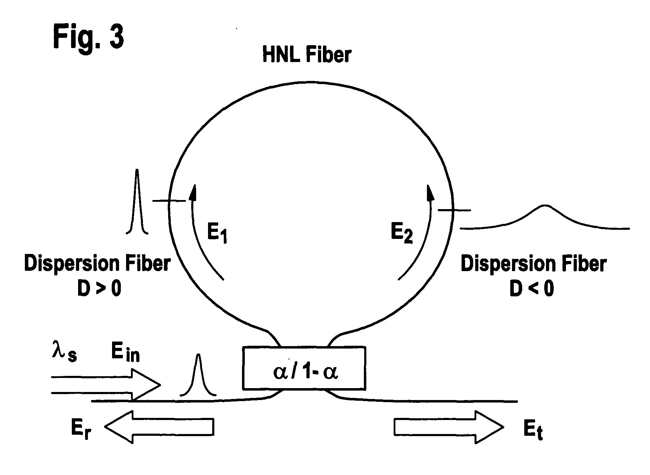

On figure 3 is shown a dispersion imbalanced nonlinear optical loop mirror according to the invention. It comprises a coupler 23 to which are connected an input path 22 and an output path 24 for optical signal. The coupler 23 is chosen such that $\alpha=0.5$ so that half of the input optical signal will be transmitted on each first and second optical paths connected to that coupler 23 and forming the optical loop path of the DI-NOLM. The optical loop path is made according to the invention of the first 30 and second 32 optical path including a first and a second fibers having different properties as to transmitted optical signals. These first and second fibers show large effective areas with local dispersion of opposite sign. Therefore the optical field $E_1$ launched into the first optical path 30 with i.e. a positive dispersion will be subjected to a sharpening of the pulse. In contrary the other optical field $E_2$ which is launched into the second optical path 32 with negative dispersion will be subjected to a broadening of its corresponding pulse (as shown on figure 3).

The nonlinear loop mirror according to the invention comprises a further optical fiber 31 with a highly nonlinear property and almost no dispersion at least for the applied optical signal. The further optical fiber 31 is part of that optical loop and directionally coupled to said first and second optical paths respectively 30, 32. Inside that HNL fiber 31 is generated a nonlinear phase shift between both counterpropagating optical fields $E_1$ and $E_2$ as a consequence of the optical peak power imbalance.

With an appropriate design (depending of the location in the transmission line) of this DI-NOLM according to the invention, it will be possible to treat i.e. regenerate optical signals made of RZ or RZ/DPSK, even with peaks possibly of a shape at halfway taking more than 65% of bit time, e.g. 66%. The treatment of such kind of signals using the method according to the invention will be possible without any alteration of the optical regeneration.

The proposed DI-NOLM based all optical regenerator allows among others RZ/DPSK regeneration at ultra-high bit rate. Furthermore, since the device uses the ultra-fast Kerr effect in optical fibers, its speed operation potential is well beyond 100 Gbit/s. The new implementation of DI-NOLM as proposed is compatible with 50% RZ or 50% RZ/DPSK modulation format i.e. for easy to generate pulses. With such configuration or method, it is not necessary to use a pulse compression stage before the loop mirror, hence reducing the complexity and cost of this solution. Moreover, when using such implementation, intersymbol interference induced by temporal pulse broadening is also reduced. Such DI-NOLM as proposed can simultaneously regenerate wavelength division multiplexing WDM channels within the same device.

**Claims**

1.  A method of regenerating optical signals comprising the steps of:

    -   providing a nonlinear optical loop mirror with an optical coupler connected to first and second optical paths forming an optical loop path including a first and a second fibers having different properties as to transmitted optical signals;
    -   supplying input optical signal via the optical coupler into said first and second optical paths, and outputting optical signal from said coupler;

    **characterized by** providing the first and second optical fibers with dispersion of opposite sign and a further optical fiber with a highly nonlinear property and almost no dispersion at least for the applied optical signal, said further optical fiber being part of said optical loop and directionally coupled to said first and second optical fiber.

2.  The method of regenerating optical signals according to claim 1 **characterized by** being also adapted for input optical signal with peaks possibly of a shape at halfway taking even more than 65% of bit time.

3.  The method of regenerating optical signals according to claim 1 or 2 **characterized by** being adapted for different kind of return to zero optical input signal.

4.  The method of regenerating optical signals according to claim 1 **characterized by** chirping the input optical signal before being supplied to the coupler of the nonlinear optical loop mirror.

5.  An optical regenerator for optical signals comprising a nonlinear optical loop mirror with an optical coupler including first and second optical paths forming an optical loop path including a first and a second fibers of different properties as to transmitted optical signal **characterized in that** the first and second optical fibers have dispersion of opposite sign and that the nonlinear optical loop mirror comprises a further optical fiber with a highly nonlinear property and with almost no dispersion at least for the applied optical signal, said further optical fiber being part of said optical loop and directionally coupled to said first and second fiber.

6.  The optical regenerator according to claim 5 **characterized in that** it is also adapted for regenerating optical signal with peaks of a shape at halfway being even more than 65% of bit time wide.

7.  The optical regenerator according to claim 5 **characterized in that** it is adapted to be possibly used inside a dispersion-managed transmission line.

# Fig. 1
( prior art )

8 (#1) ;HNL-DSF-1($D_1$ ,$\phi_1$)

8 (#2) ;HNL-DSF-2($D_2$ ,$\phi_2$ )

INPUT SIGNAL
LIGHT ($\lambda_s$) 10

$P_s$

12

PROBE LIGHT
( $\lambda_a$ )

OUTPUT SIGNAL
LIGHT ($\lambda_c$)

$P_c$

2  4  6

# Fig. 2
## ( prior art )

HNL Fiber

Dispersion Fiber

$E_1$

$E_2$

compensation
Dispersion Fiber

$\lambda_s$  $E_{in}$

$\alpha / 1 - \alpha$

$E_r$

$E_t$

**Fig. 3**

**European Patent Office**

**EUROPEAN SEARCH REPORT**

Application Number

EP 04 29 0304

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 227 363 A (FURUKAWA ELECTRIC CO LTD) 31 July 2002 (2002-07-31) | 1,2,5-7 | H04B10/17 |
| Y | * page 4, paragraph 11 - page 5, paragraph 18 * <br> * claim 1 * <br> * figures 3,4 * <br> ----- | 3,4 | |
| Y | WO 01/78264 A (ISLAM MOHAMMED N ; XTERA COMMUNICATIONS INC (US)) 18 October 2001 (2001-10-18) * page 9, lines 16-18; figure 9c * ----- | 3,4 | |
| X | JP 2000 214499 A (NIPPON TELEGR & TELEPH CORP <NTT>) 4 August 2000 (2000-08-04) * figure 2 * ----- | 1,2,5-7 | |
| | | | TECHNICAL FIELDS SEARCHED (Int.Cl.7) <br><br> H04B <br> G02F |

The present search report has been drawn up for all claims

| Place of search | Date of completion of the search | Examiner |
|---|---|---|
| The Hague | 13 July 2004 | Carrasco Comes, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 04 29 0304

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2004

| Patent document cited in search report | | Publication date | Patent family member(s) | | Publication date |
|---|---|---|---|---|---|
| EP 1227363 | A | 31-07-2002 | JP CA EP US | 2002303899 A<br>2369471 A1<br>1227363 A2<br>2003012492 A1 | 18-10-2002<br>30-07-2002<br>31-07-2002<br>16-01-2003 |
| WO 0178264 | A | 18-10-2001 | AU WO US | 6454801 A<br>0178264 A2<br>2004091204 A1 | 23-10-2001<br>18-10-2001<br>13-05-2004 |
| JP 2000214499 | A | 04-08-2000 | JP | 3478985 B2 | 15-12-2003 |

EPO FORM P0459

For more details about this annex : see Official Journal of the European Patent Office, No. 12/82